Europäisches Patentamt

European Patent Office

Office européen des brevets

(11) Veröffentlichungsnummer: **0 303 044**

**A2**

## (12) EUROPÄISCHE PATENTANMELDUNG

(21) Anmeldenummer: 88110682.7

(22) Anmeldetag: 05.07.88

(51) Int. Cl.⁴: **F16L 5/02 , H02G 3/22**

(30) Priorität: 14.08.87 DE 3727160

(43) Veröffentlichungstag der Anmeldung:
15.02.89 Patentblatt 89/07

(84) Benannte Vertragsstaaten:
**AT BE CH ES FR GB IT LI NL SE**

(71) Anmelder: **PLASTOFORM GMBH & CO. KG**
**Burgstrasse 25**
**D-4973 Vlotho(DE)**

(72) Erfinder: **Hauff, Werner**
**Herlbühlstrasse 19**
**D-7925 Dischingen(DE)**

(74) Vertreter: **Fay, Hermann, Dipl.-Phys. Dr. et al**
**Ensingerstrasse 21 Postfach 1767**
**D-7900 Ulm (Donau)(DE)**

(54) **Durchführung für Leitungen durch eine Wandöffnung.**

(57) Bei der Durchführung für Leitungen (1) durch eine Wandöffnung (2) sind die Paßstücke (7) so ausgebildet, daß sie einstückig quer über die Wandöffnung (2) von einer zur gegenüber liegenden anderen Rahmenseite reichen und an beiden Enden mit ihren Stirnflächen (11) der Laibungsfläche (6) des Rahmens (4) anliegen sowie nach außen über die Rahmenseitenflächen (5, 5´) greifende, dadurch die Paßstücke (7) in Leitungslängsrichtung am Rahmen (4) fixierende Verankerungsnasen (12) aufweisen. Die Paßstücke (7) sind an den Trennflächen (8) mit einander zugeordneten Vorsprüngen und Vertiefungen (13) versehen, durch die benachbarte Paßstücke (7) an der Trennfläche (8) in Leitungslängsrichtung formschlüssig miteinander im Eingriff stehen.

Fig.1

EP 0 303 044 A2

## Durchführung für Leitungen durch eine Wandöffnung.

Die Erfindung betrifft eine Durchführung für Leitungen, wie Kabel, Rohre oder dergl., durch eine Wandöffnung, bestehend aus einem die Wandöffnung rundum begrenzenden wandfesten Rahmen, an dessen sich paarweise gegenüber liegenden Rahmenseiten zwei in Leitungslängsrichtung hintereinander liegende Rahmenseitenflächen und dazwischen eine in den Rahmenseitenflächen nach innen in die Wandöffnung vorspringende Laibungsfläche ausgebildet sind, ferner aus den Leerraum des Rahmens ausfüllenden, ganz oder teilweise elastischen Paßstücken, die gegeneinander und einerseits gegen die Leitungen, andererseits gegen die Laibungsfläche des Rahmens abdichten, wozu die Paßstücke den Leitungsquerschnitten entsprechende Leitungsaufnahmen bilden, die von Trennflächen zwischen den Paßstücken geschnitten werden, und aus einer die Paßstücke im Rahmen elastisch verpressenden Druckvorrichtung mit ebenfalls ganz oder teilweise elastischen, innerhalb des Rahmens liegenden Preßplatten.

Bei einer aus der DE-PS 958 671 bekannten Durchführung dieser Art besitzen jeweils zwei eine Leitung umgebende Paßstücke quadratischen Umriß, so daß die Trennflächen sich kreuzend längs und quer im rechteckigen Rahmen verlaufen. Zur elastischen Verpressung der Paßstücke ist eine starre Preßplatte vorgesehen, die mit fest in ihr angeordneten elastischen Randleisten gegen die Laibungsfläche des Rahmens abgedichtet und mit Hilfe einer Preßschraube in der Rahmenebene gegen die Paßstücke verstellbar ist. Der von der Preßschraube durchsetzte Rahmenraum muß nach dem Verpressen der Paßstücke durch elastische Preßplatten geschlossen werden, die zwischen sich die Preßschraube aufnehmen und miteinander durch quer zur Rahmenebene Verlaufende Spannschrauben verpreßt werden, so daß sie sich infolge der dabei auftretenden Kompression sowohl gegen die starre Preßplatte als auch gegen die Laibungsfläche des Rahmens dichtend andrücken. Um ein Ausweichen der Paßstücke aus der Rahmenebene zu verhindern und dadurch die Druckfestigkeit der Durchführung zu erhöhen, sind der starren Preßplatte ähnlich ausgebildete und zu dieser parallel angeordnete, jeweils zwischen zwei Reihen von Paßstücken in den Rahmen eingelegte starre Versteifungsplatten mit Randleisten vorgesehen, die überstehende Nasen bilden, welche den Rahmenseitenflächen anliegen und dadurch die Versteifungsplatten gegen Verschiebungen quer zur Rahmenebene sichern. Die Paßstücke stützen sich unmittelbar gegen die Randleisten der Versteifungsplatten ab, die ihrerseits an den der Laibungsfläche zugekehrten Seiten mit bogenförmigen Ausnehmungen versehen sind, damit die elastischen Paßstücke beim Verpressen diese Ausnehmungen füllen und dadurch die Versteifungsplatten gegen die Laibungsfläche des Rahmens abdichten können. Jedoch sind hierfür hohe Verpreßdrucke erforderlich, die in gleicher Höhe auch an den Leitungen wirksam werden, was bei druckempfindlichen Leitungen, insbesondere bei elektrischen Kabeln, von Nachteil sein kann. Abgesehen hiervon ist bei den bekannten Durchführungen im Ergebnis nachteilig, daß sie einen aufwendigen Aufbau besitzen und zu ihrer Montage entsprechend viel Zeit erfordern. Die Paßstücke müssen schon herstellerseitig mit den Leitungsaufnahmen versehen werden, die im Querschnitt meistens verschiedene Größen besitzen, so daß die richtige Anordnung und Zuordnung der Paßstücke im Rahmen bei der Montage häufig der Lösung eines Puzzlespiels ähnelt. Die von den Versteifungsplatten belegten Trennflächen können nicht mit Leitungsaufnahmen besetzt sein. Bei einer Nachbelegung müssen Paßstücke ausgewechselt werden, was nicht ohne weitgehende Zerlegung der gesamten Durchführung möglich ist.

Der Erfindung liegt die Aufgabe zugrunde, eine Durchführung der eingangs genannten Art so auszubilden, daß gegenseitige axiale Verschiebungen der Paßstücke auch unter ungünstigen Bedingungen und insbesondere auch im mittleren Querschnittsbereich der Wandöffnung sicher ausgeschlossen sind, ohne daß es dabei nachteilig großer Drucke für die Verpressung der Paßstücke im Rahmen bedarf.

Diese Aufgabe wird nach der Erfindung dadurch gelöst, daß die Paßstücke einstückig quer über die Wandöffnung von einer zur gegenüber liegenden anderen Rahmenseite reichen und an beiden Enden mit ihren Stirnflächen der Laibungsfläche anliegen sowie nach außen über die Rahmenseitenflächen greifende, dadurch die Paßstücke in Leitungslängsrichtung am Rahmen fixierende Verankerungsnasen aufweisen und daß die Paßstücke an den Trennflächen mit einander zugeordneten Vorsprüngen und Vertiefungen versehen sind, durch die benachbarte Paßstücke an der Trennfläche in Leitungslängsrichtung formschlüssig miteinander im Eingriff stehen. Durch die Erfindung wird erreicht, daß die einstückig über die gesamte Rahmenbreite verlaufenden Paßstücke jeweils unmittelbar mit Hilfe ihrer Verankerungsnasen am Rahmen gegen Verschiebungen quer zur Rahmenebene gesichert sind, also bei Zug- oder Druckbeanspruchungen nicht aus dem Rahmen rutschen können. Das gilt für von außen sowohl durch abzudichtenden Druck als auch durch Leitungszug auf die Paßstücke aufgebrachte Beanspruchungen. Die

2

Versteifungsplatten der bekannten Durchführungen können daher vollständig entfallen, so daß nicht nur im Prinzip alle Trennflächen mit Leitungsaufnahmen besetzt und dadurch insgesamt dichtere Belegungen erreicht werden, sondern auch die Paßstücke an jeder Trennfläche miteinander im Eingriff stehen können. Dadurch können sich unterschiedliche Belastungen der Paßstücke quer zur Rahmenebene unmittelbar zwischen den Paßstücken ausgleichen und gleichmäßig in den Rahmen abgeleitet werden, was eine wesentliche mechanische Versteifung des von den Paßstücken insgesamt gebildeten Dichtungspaket ergibt. Dabei kann auch der Druck für die Verpressung der Paßstücke vergleichsweise gering sein, da mit dem Wegfall der Versteifungsplatten auch das Problem ihrer Abdichtung gegen den Rahmen entfallen ist und der Preßdruck nicht die Paßstücke gegen Verschieben festzuhalten, sondern nur die Funktion der Abdichtung der Paßstücke gegeneinander, gegen die Leitungen und die Laibungsfläche zu erfüllen hat. Dieser niedrige Preßdruck ermöglicht es auch, den Rahmen statt aus Stahl aus Beton herzustellen und beim Gießen einer im fertigen Zustand die Durchführung tragenden Betonwand unmittelbar an der Berandung der Wandöffnung auszuformen. Dadurch kann auch ein Stahlrahmen als werkseitig herzustellendes selbständiges Bauteil der Durchführung entfallen. Außerdem ist mit einem Rahmen aus Beton statt Stahl die Feuerwiderstandsdauer der Durchführung größer. Weitere wesentliche Vorteile der erfindungsgemäßen Durchführung bestehen darin, daß die Paßstücke wegen ihrer unmittelbaren Verankerung am Rahmen auch bei noch fehlender Verpressung während der Montage, beispielsweise bei Deckendurchführungen, nicht aus dem Rahmen herausfallen können und infolge ihrer erheblich geringeren Anzahl bei der Montage schnell richtig geordnet und in den Rahmen eingesetzt sind. Die Leitungsaufnahmen können zwar in den Paßstücken ab Werk vorgeformt sein, aber auch nach schon erfolgter Montage noch ohne weiteres mit einem passenden Hülsenbohrer gebohrt werden, wenn nur die Paßstücke noch nicht verpreßt sind. Denn die Paßstücke sind auch ohne Preßdruck im Rahmen gehalten und können daher im Rahmen bearbeitet werden. Insbesondere ist es somit auch leicht möglich, bei Nachbelegungen der Durchführung weitere Leitungsaufnahmen in die Paßstücke zu bohren. Die Paßstücke brauchen dazu nicht demontiert, sondern nur vom Preßdruck entlastet zu werden. Auch können in diesem Zustand in nicht belegten Leitungsaufnahmen Verschlußstopfen gesetzt oder gezogen werden, so daß alle Leitungsaufnahmen bis zur Belegung mit einer Leitung stets geschlossen gehalten werden können, so daß der Brandschutz sofort von der Montage an gegeben ist.

In einer bevorzugten Ausführungsform sind die Vorsprünge und Vertiefungen als quer zur Leitungslängsrichtung verlaufende Nuten und Federn ausgebildet. Das ergibt die gewünschte Verzahnung der Paßstücke quer zur Rahmenebene, ermöglicht aber ein gegenseitiges Arbeiten der Paßstücke in der Rahmenebene, so daß jedes Paßstück unbeeinträchtigt durch benachbarte Paßstücke den Preßdruck von seinen Stirnflächen auf die Laibungsfläche übertragen und dadurch zur sicheren Abdichtung am Rahmen kommen kann.

Die Festigkeit der Durchführung gegen abzudichtenden Druck kann zweckmäßig dadurch weiter erhöht werden, daß die Paßstücke an mindestens der einen ihrer quer zur Leitungslängsrichtung verlaufenden Querflächen konvex gewölbt sind, wobei die konvex gewölbte Querfläche auf der Durchführungsseite mit höherem Druck liegt. Die andere Querfläche kann dabei eine ebene Fläche oder konkav oder auch konvex gewölbt sein. Auf diese Weise kann eine gewölbeartige Statik der Paßstücke gegenüber dem Außendruck erreicht werden, wodurch sich mit steigendem Außendruck eine immer stärkere Verpressung der Paßstücke gegen die Leitungen und den Rahmen ergibt.

Zum Einlegen in den Rahmen werden die Paßstücke entweder in der Rahmenebene soweit gekippt oder quer zur Rahmenebene vorübergehend soweit elastisch verformt, daß sie mit ihren Verankerungsnasen durch den lichten Freiraum des Rahmens passen. Für das Verkippen steht aber häufig nicht ausreichend Platz im Rahmen zur Verfügung, so daß das Einlegen der Paßstücke unter elastischer Verformung von besonderer Bedeutung für die Erfindung ist. Ein hierfür von der Erfindung bevorzugtes Verfahren ist dadurch gekennzeichnet, daß die Paßstücke elastisch quer zur Rahmenebene durchgewölbt und dabei an der durch die Wölbung gestauchten (konkaven) Paßstückfläche die Verankerungsnasen einander auf einen Außenabstand gleich oder kleiner als das lichte Rahmenmaß genähert werden, und daß die so verformten Paßstücke mit der gestauchten (konkaven) Paßstückfläche und den einander genäherten Verankerungsnasen voran unverkippt in den Rahmen eingeschoben werden. Um die elastische Verformung zu erleichtern, kann es sich empfehlen, die Paßstücke auf der durch die Wölbung konvexen Seite mit Einschnitten zu versehen, die im wesentlichen senkrecht zur gewölbten Paßstückfläche verlaufen und die sich bei der Wölbung aufspreizen. Zur Durchführung des Verfahrens empfiehlt sich ein Werkzeug, gekennzeichnet durch einen Bügel mit am Paßstück abstützbaren Bügelschenkeln und einer im Bügelrücken etwa mittig zwischen den Bügelschenkeln angeordneten Zugschraube, an der ein das Paßstück umgreifender Haken angeordnet ist, der durch Spannen der Zugschraube in Richtung zum Bügelrücken hin bewegbar ist. Der Haken greift das Paßstück in dessen Mitte, während die Enden des Paßstücks gegen den Zug des Hakens an den Bügelschenkeln abgestützt sind, was in Abhängigkeit vom Anzug der Zugschraube zu einer genau einstellbaren Durchwölbung des Paßstücks führt.

Weiter besteht, - insbesondere bei dicken Wänden, - die Möglichkeit, daß an beiden Enden der Wandöffnung je ein Rahmen mit Paßstücken und Druckvorrichtung angeordnet und zwischen beiden Rahmen ein Futterrohr in die Wand eingebettet ist, dessen Mantel die äußere Begrenzung der innenliegenden Rahmenseitenflächen bildet. Das Futterrohr kann mit feuerhemmenden Substanzen versehen sein, die im Brandfall freigesetzt werden, was die Feuerwiderstandsdauer weiter erhöht. Im übrigen kann ein solches Futterrohr als verlorene Schalung für die Wandöffnung bei der Herstellung einer aus Beton bestehenden Wand dienen. Eine insoweit vorteilhafte Ausführungsform ist dadurch gekennzeichnet, daß der Mantel an beiden Enden eine einwärts in die Wandöffnung vorstehende Ringrippe aufweist, welche unmittelbar die innenliegende Rahmenseitenfläche bildet. Die Wandaußenflächen können dann unmittelbar die außenliegenden Rahmenseitenflächen bilden. Um dabei auch die Laibungsfläche in einfacher Weise formen und Verschmutzungen des Futterrohrinneren durch den Beton zu vermeiden, empfiehlt es sich, daß an der Ringrippe eine Kappe mit einer Mantelwand einrastbar ist, die eine Schalfläche für die Laibungsfläche des Rahmens bildet und bei einer Betonwand die Ausformung des vollständigen Rahmens beim Gießen der Wand unmittelbar an der Berandung den Wandöffnung ermöglicht.

In Verbindung mit den erfindungsgemäß gestalteten Paßstücken erweist sich eine Ausführungsform der Druckvorrichtung als besonders vorteilhaft, die dadurch gekennzeichnet ist, daß wie die Paßstücke auch mindestens zwei der Preßplatten einstückig quer über die Wandöffnung von einer zur gegenüber liegenden anderen Rahmenseite reichen und an beiden Enden mit ihren Stirnflächen der Laibungsfläche anliegen, daß die beiden Preßplatten im wesentlichen keilförmigen Querschnitt mit geneigt zur Leitungslängsrichtung verlaufenden Keilflächen aufweisen und an diesen Keilflächen so aneinander liegen, daß sich das dicke Keilende der einen Preßplatte am dünnen Keilende der jeweils anderen Preßplatte befindet, daß die beiden Preßplatten ferner auf der einen Seite der Durchführung durch eine ihren quer zur Leitungslängsrichtung verlaufenden Querflächen anliegende gemeinsame Spannplatte verbunden sind, daß auf der anderen Seite der Durchführung zwei getrennte Spannplatten vorgesehen sind, die dort jeweils der Querfläche nur einer der Preßplatten anliegen, und daß die gemeinsame Spannplatte einerseits und die beiden getrennten Spannplatten andererseits durch Spannschrauben verbunden sind, die jeweils nur in derjenigen Preßplatte verlaufen, welcher die an die Spannschrauben angeschlossene Einselspannplatte zugeordnet ist. Sind nur zwei solcher Preßplatten vorhanden, so verlaufen die von der Keilfläche abgewandten Flächen beider Preßplatten vorzugsweise in zueinander parallelen Ebenen. Eine solche Druckvorrichtung besitzt nicht nur einen konstruktiv einfachen Aufbau, sondern auch den Vorteil, im Rahmen an beliebiger Stelle zwischen den Paßstücken angeordnet werden zu können. Darüber hinaus ermöglicht sie eine Verpressung der Paßstücke in zwei Schritten: Zunächst werden die beiden Preßplatten an der Keilfläche übereinander verschoben, wodurch sich die für die Verpressung wirksame Gesamtdicke beider Preßplatten ändert. Liegen dann beide Preßplatten sich deckend übereinander, kann mindestens eine der Preßplatten noch für sich quer zur Rahmenebene komprimiert werden, was ihre Dicke nochmals vergrößert und eine zusätzliche Nachspannung ermöglicht. Um auch eine solche Druckvorrichtung im gespannten Zustand gegen Verschiebungen quer zur Rahmenebene zu sichern, kann sie ebenfalls am Rahmen fixiert sein, ohne daß dadurch die Möglichkeit des Nachspannens verloren geht. Eine dafür bevorzugte Ausführungsform ist dadurch gekennzeichnet, daß eine der Einzelspannplatten und die gemeinsame Spannplatte am Rande seitlich über die Preßplatte vorstehen und die Rahmenseitenflächen übergreifen, daß die andere Einzelspannplatte aber nicht über die Stirn- und Keilflächen ihrer Preßplatte vorsteht, mit diesen Flächen also höchstens bündig ist, und daß sich die überstehende Einzelspannplatte am dickeren Keilende die bündige Einzelspannplatte am dünneren Keilende ihrer jeweiligen Preßplatte befindet. Zweckmäßig erstreckt sich der überstehende Plattenrand an der Einzelspannplatte nur auf der der anderen Einselspannplatte gegenüber liegenden Seite und nicht über die Stirnflächen der eigenen Preßplatte hinaus, wodurch die Möglichkeit geschaffen wird, die Einzelspannplatte mit dem überstehenden Rand in einfacher Weise durch den Rahmen hindurch und damit die gesamte Druckvorrichtung von nur einer Wandseite her montieren zu können. Zweckmäßig sind in die der Einzelspannplatte mit dem überstehenden Plattenrand zugeordnete Preßplatte die Spannschrauben aufnehmende starre Hülsen eingelassen, die etwas kürzer sind als die Laibungsfläche breit ist. Sie beeinträchtigen damit nicht den ersten Spannschritt, stabilisieren aber die Preßplatte gegen Verwölben unter dem Zug der Spannschrauben. Die Hülsen können starr mit der Einzelspannplatte verbunden sein und ein Muttergewinde für die Spannschrauben aufweisen.

Schließlich besteht bei einer solchen Druckvorrichtung die Möglichkeit, daß die gemeinsame Spannplatte in den über die Stirnflächen der Preßplatten vorstehenden Randbereichen Löcher mit Muttergewinde zum Eindrehen sich gegen die Rahmenseitenflächen oder die Wand abstützender Abziehschrauben aufweist. Mit Hilfe der Abziehschrauben kann die nachspannbare Preßplatte auf der Keilfläche von der anderen Preßplatte abgezogen und dadurch ohne Demontage die Verpressung der Paßstücke im Rahmen gelöst werden, wenn an den Paßstücken nachträgliche Arbeiten vorgenommen werden müssen.

Im folgenden wird die Erfindung an einem in der Zeichnung dargestellten Ausführungsbeispiel näher erläutert; es zeigen:

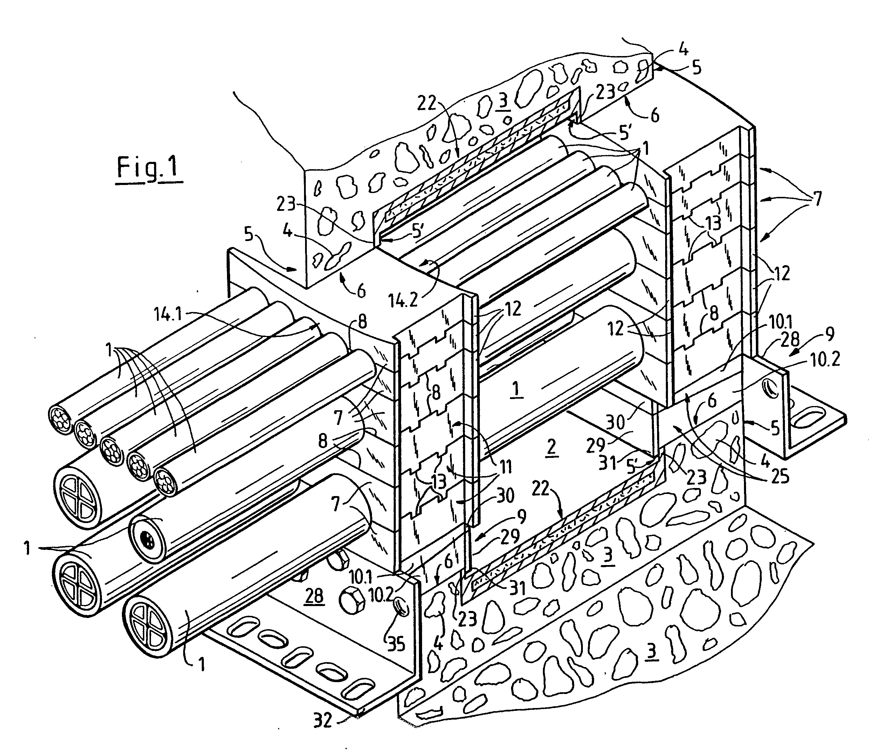

Fig. 1 in einer Schrägdarstellung teilweise geschnitten eine Durchführung nach der Erfindung in einer Betonwand,

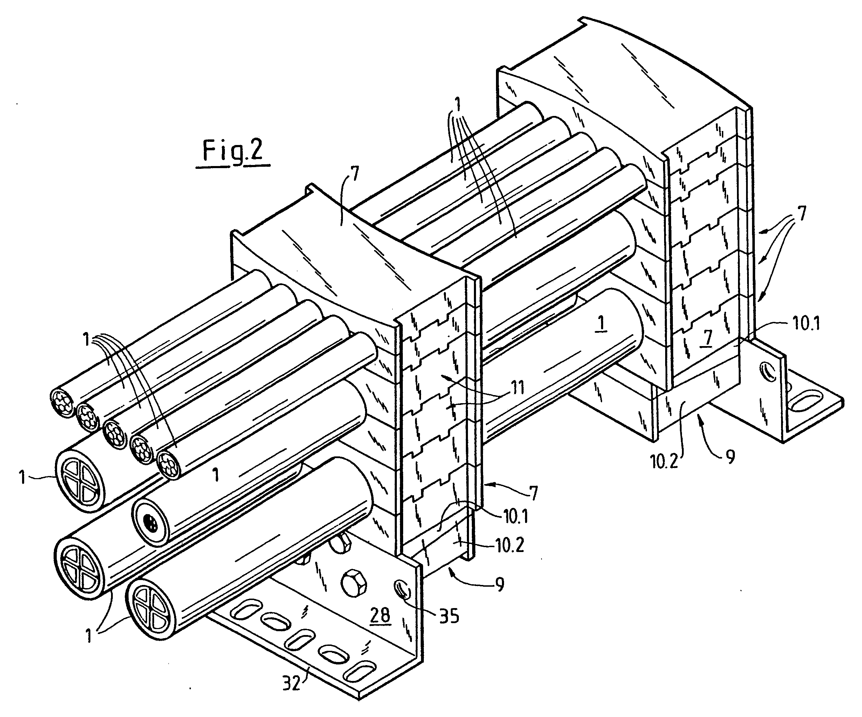

Fig. 2 die Durchführungsteile zusammen mit den Leitungen der Durchführung nach Fig. 1 ohne Wiedergabe der Wand bei im übrigen der Fig. 1 entsprechender Darstellung,

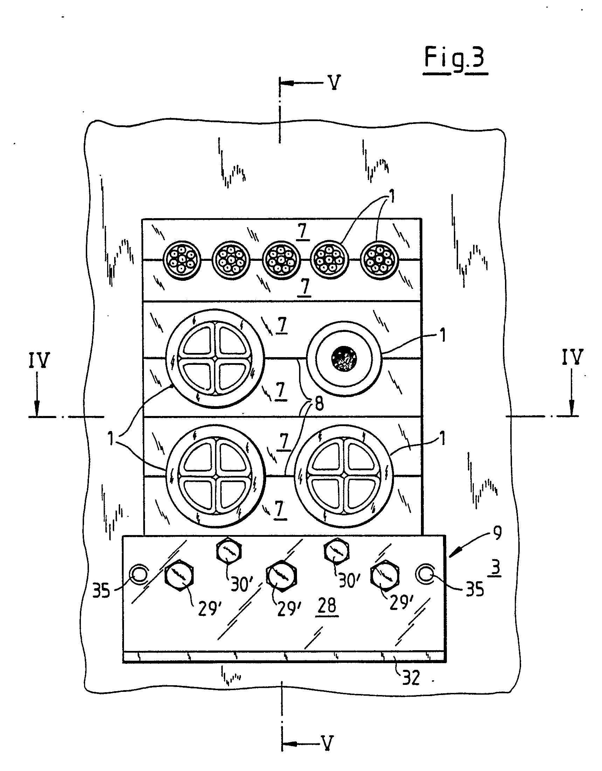

Fig. 3 eine Vorderansicht der Wanddurchführung nach Fig. 1,

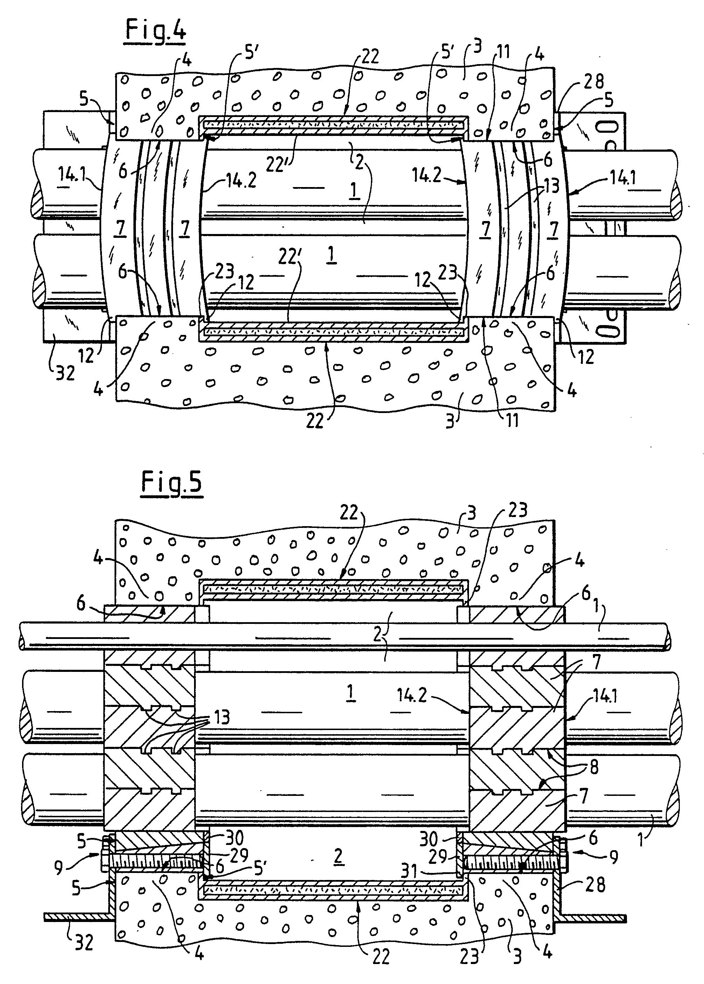

Fig. 4 einen Schnitt in Richtung IV - IV durch den Gegenstand der Fig. 3,

Fig. 5 einen Schnitt in V-V durch den Gegenstand nach Fig. 3,

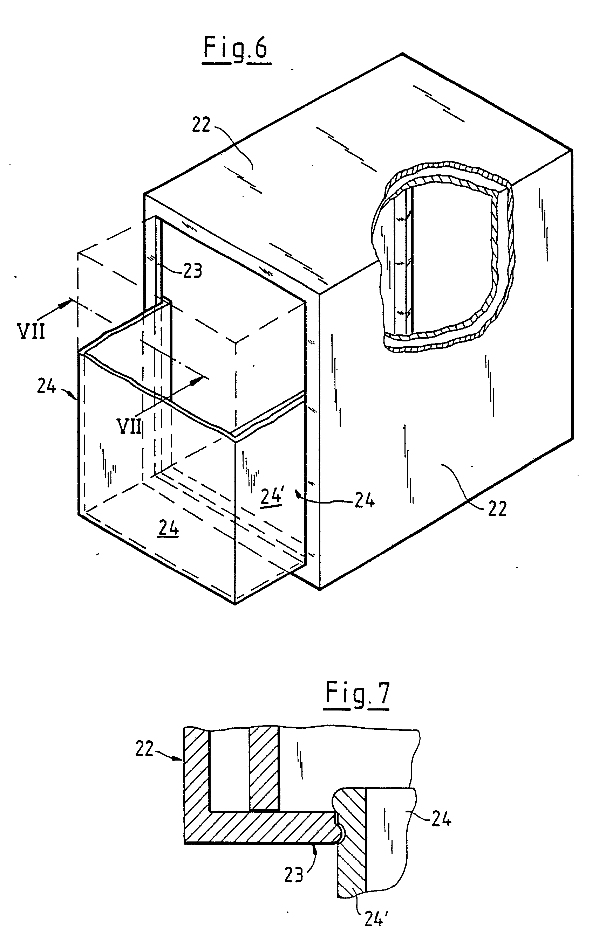

Fig. 6 des Futterrohr der Durchführung nach Fig. 1 mit aufgesetzter Kappe von dem Wandeinbau in einer Schrägdarstellung,

Fig. 7 den Teilschnitt in Richtung VII-VII durch das Futterrohr nach Fig. 6,

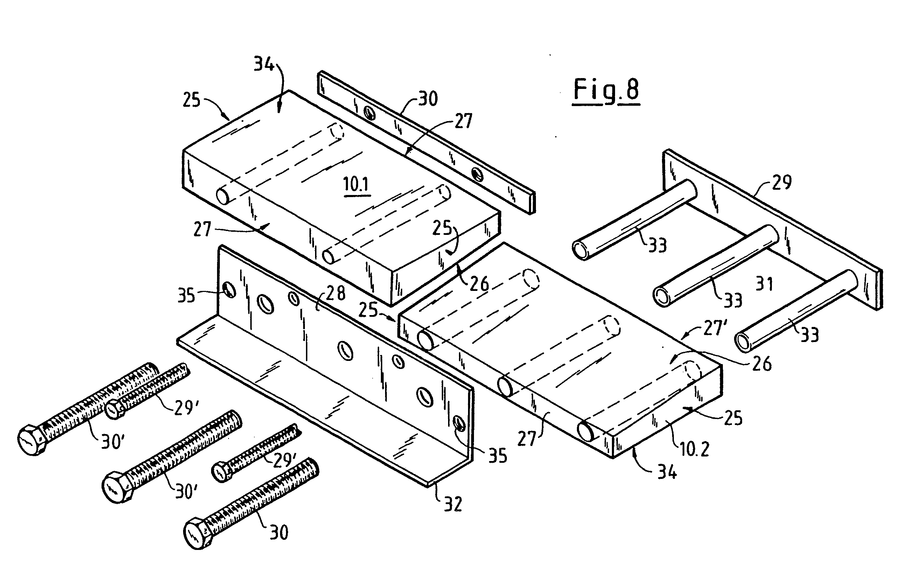

Fig. 8 eine Schrägdarstellung der Druckvorrichtung der Durchführung nach den Fig. 1 und 2 im auseinander gezogenen Zustand,

Fig. 9 die Druckvorrichtung nach Fig. 8 in einem Querschnitt zu Beginn der Montage im Rahmen,

Fig. 10 die Druckvorrichtung nach den Fig. 8 und 9 im Zustand fertiger Verpressung,

Fig. 11 ein zum Zweck des Einlegens in den Rahmen elastisch durchgewölbtes Paßstück in einer Schrägansicht mit dem die Durchwölbung bewirkenden Werkzeug,

Fig. 12 das Werkzeug nach Fig. 11 ohne Paßstück.

In der Zeichnung sind die Leitungen 1, nämlich elektrische Kabel verschiedenen Durchmessers, jeweils nur zum Teil dargestellt, um die Figuren übersichtlich zu halten. Die Leitungen 1 laufen durch eine Wandöffnung 2 in einer Betonwand 3. Die Durchführung umfaßt einen die Wandöffnung rundum betrenzenden wandfesten Rahmen 4, an dessen sich paarweise gegenüber liegenden Rahmenseiten zwei in Leitungslängsrichtung hintereinander liegende Rahmenseitenflächen 5, 5′ und dazwischen eine in den Rahmenseitenflächen nach innen in die Wandöffnung 2 vorspringende Laibungsfläche 6 ausgebildet sind. Die Durchführung umfaßt ferner den Leerraum des Rahmens 4 ausfüllenden, ganz oder teilweise elastischen Paßstücke 7, beispielsweise aus Necpren, die gegeneinander und einerseits gegen die Leitungen 1, andererseits gegen die Laibungsfläche 6 des Rahmens 4 abdichten. Die Paßstücke 7 bilden den Leitungsquerschnitten entsprechende Leitungsaufnahmen, die von Trennflächen 8 zwischen den Paßstücken 7 geschnitten werden. Der zur Abdichtung benötigte Dichtungsdruck wird von einer die Paßstücke 7 im Rahmen elastisch verpressenden Druckvorrichtung 9 ausgeübt. Diese Druckvorrichtung 9 umfaßt zwei ebenfalls ganz oder teilweise elastische, innerhalb des Rahmens 4 liegende Preßplatten 10.1, 10.2, die in noch näher zu erläuternder Weise gegeneinander bewegt und dadurch im Rahmen 4 verspannt werden können.

Im einzelnen reichen die Paßstücke 7 einstückig quer über die Wandöffnung 2 von einer zur gegenüber liegenden anderen Rahmenseite, wobei diese Rahmenseiten im Ausführungsbeispiel die vertikal ausgerichteten Längsseiten des Rahmens 4 sind. An beiden Enden liegen die Paßstücke 7 mit ihren Stirnflächen 11 der Laibungsfläche 6 an. Außerdem sind sie dort mit nach außen über die Rahmenseitenflächen 5,5′ greifenden Verankerungsnasen 12 versehen, welche die Paßstücke 7 durch Anschlag an den Rahmenseitenflächen 5, 5′ in Leitungslängsrichtung am Rahmen 4 fixieren. Die Paßstücke 7 sind an den Trennflächen 8 mit einander zugeordneten, quer zur Leitungslängsrichtung verlaufenden Nuten und Federn 13 versehen. Über diese Nuten und Federn 13 stehen die benachbarten Paßstücke 7 an der Trennfläche 8 in Leitungslängsrichtung formschlüssig miteinander im Eingriff. Die Paßstücke 7 sind an der einen ihrer quer zur Leitungslängsrichtung verlaufenden Querflächen 14.1 konvex, auf der anderen Querfläche 14.2 konkav gewölbt. Die konvex gewölbte Querfläche 14.1 befindet sich auf der Durchführungsseite mit dem höheren abzudichtenden Druck, also in der Regel auf der Wandaußenseite.

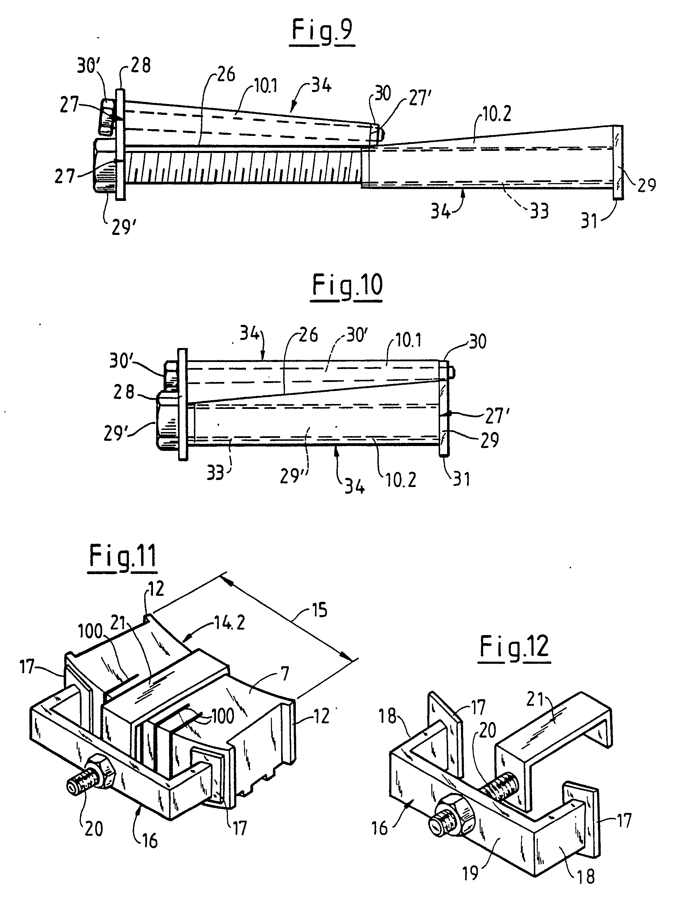

Zum Einlegen in den Rahmen 4 werden die Paßstücke 7 entweder in der Rahmenebene soweit gekippt, daß sie mit ihren Verankerungsnasen durch den lichten Freiraum des Rahmens 4 passen, oder entsprechend Fig. 11 senkrecht zur Rahmenebene soweit elastisch zusätzlich durchgewölbt, daß sich dabei die Verankerungsnasen 12 an der gestauchten konkaven Querfläche 14.2 einander auf einen Außenabstand (Doppelpfeil 15) kleiner als das lichte Innenmaß des Rahmens 4 nähern und daher die Paßstücke 7 mit diesen Verankerungsnasen 12 auch unverkippt durch den Rahmen 4 passen. Um die Durchwölbung zu erleichtern, sind die Paßstücke 7 an der bei der Durchwölbung konvexen Querfläche 14.2 mit Einschnitten 100 versehen, die senkrecht zur Querfläche 14.2 und zu den Trennflächen 8 verlaufen und sich bei der Durchwölbung aufspreizen. Für diese elastische Durchwölbung der Paßstücke 7 zum Zweck ihres Einführens in den Rahmen 4 kann ein Werkzeug dienen, das in Fig. 11 zusammen mit einem entsprechend durchgewölbten Paßstück 7, in Fig. 12 für sich allein dargestellt ist. Im einzelnen besteht es aus einem Bügel 16 mit am Paßstück 7 über Schuhe 17 abstützbaren Bügelschenkeln 18 und aus einer im Bügelrücken 19 etwa mittig zwischen den Bügelschenkeln 18 angeordneten Zugschraube 20, an der ein das Paßstück 7 umgreifender Haken 21 angeordnet ist, der durch Spannen der Zugschraube 20 in Richtung zum Bügelrücken 19 hin bewegbar ist.

Im Ausführungsbeispiel besitzt die Wand 3 eine so große Dicke, daß an beiden Enden der Wandöffnung 2 je ein Rahmen 4 mit Paßstücken 7 und Druckvorrichtung 9 angeordnet werden kann. Zwischen diesen beiden Rahmen 4 ist ein Futterrohr 22 in die Wand 3 eingebettet. Der Mantel 22' dieses Futterrohrs 22 bildet die äußere Begrenzung der innenliegenden Rahmenseitenflächen 5' und kann, wie im Ausführungsbeispiel, doppelwandig ausgebildet sein. Im Wandzwischenraum können feuerhemmende Substanze, enthalten sein, die im Brandfall frei werden und durch ihre flammhemmende bzw. kühlende Wirkung die Feuerwiderstandsdauer der Durchführung erheblich erhöhen können. Im übrigen weist der Mantel 22' an beiden Enden eine einwärts in die Wandöffnung 2 vorstehende Ringrippe 23 auf, die unmittelbar die innenliegende Rahmenseitenfläche 5' bildet. An dieser Ringrippe 23 ist eine Kappe 24 einrastbar, die mit einer Mantelwand 24' eine Schalfläche für die Laibungsfläche 6 des Rahmens 4 bildet und bei der Betonwand 3 die Ausformung des Rahmens 4 beim Gießen der Wand unmittelbar an der Berandung der Wandöffnung 2 ermöglicht. Ein eigener, nachträglich in die fertige Betonwand 3 einzulassender Stahlrahmen für die Durchführung wird dadurch entbehrlich.

Wie die Paßstücke 7 reichen auch die beiden Preßplatten 10.1, 10.2 einstückig quer über die Wandöffnung 2 von der einen zur gegenüber liegenden anderen Rahmenlängsseite und liegen an beiden Enden mit ihren Stirnflächen 25 der Laibungsfläche 6 an. Die beiden Preßplatten besitzen im wesentlichen keilförmigen Querschnitt mit zur Leitungslängsrichtung geneigt verlaufenden Keilflächen 26, an welchen sie aneinander und im Rahmen 4 im fertig gespannten Zustand der Druckvorrichtung übereinander liegen. Dabei befindet sich das dicke Keilende der einen Preßplatte an dünnen Keilende der jeweils anderen Preßplatte. Die beiden Preßplatten sind ferner auf der einen Seite der Durchführung durch eine ihren quer zur Leitungslängsrichtung verlaufenden Querflächen 27 anliegende gemeinsame Spannplatte 28 verbunden. Auf der anderen Seite der Durchführung sind zwei getrennte Spannplatten 29, 30 vorgesehen, die dort jeweils der Querfläche 27' nur einer der Preßplatten 10.1, 10.2 anliegen. Die gemeinsame Spannplatte 28 einerseits und die beiden getrennten Spannplatten 29, 30 andererseits sind durch jeweils eigene Spannschrauben 29', 30' verbunden, die nur in derjenigen Preßplatte 10.1, 10.2 verlaufen, welcher die an die Spannschrauben 29', 30' angeschlossene Einzelspannplatte 29, 30 zugeordnet ist. Eine der Einzelspannplatten im Ausführungsbeispiel die untere Einzelspannpalte 29, und die gemeinsame Spannplatte 28 weisen seitlich über die Preßplatte 10.2 vorstehende und die Rahmenseitenflächen 5' übergreifende Plattenränder 31 auf. Die andere Einzelspannplatte 30 steht nicht über die Stirn- und Keilflächen 25, 26 ihrer Preßplatte 10.1 vor, sondern endet mit diesen Flächen bündig. Die überstehende Spannplatte 29 befindet sich am dickeren Keilende, die bündige Spannplatte 30 am dünneren Keilende ihrer jeweiligen Preßplatte 10.1, 10.2. Der überstehende Plattenrand 31 an der unteren Einzelspannplatte 29 erstreckt sich auf der der oberen Einzelspannplatte 30 gegenüber liegenden Seite, also nach unten und nicht über die Stirnflächen 25 der eigenen Preßplatte 10.2 hinaus. Diese Preßplatte 10.2 mit der Einzelspannplatte 29 kann daher durch den Rahmen 4 hindurch geschoben werden, wobei sie nur soweit angehoben werden muß, daß der überstehende Plattenrand 31 nicht an einem der Druckvorrichtung unterwärts benachbarten Paßstück 7 oder der unteren Rahmenquerseite anschlägt, wenn - wie im Ausführungsbeispiel - die Druckvorrichtung 9 zu unterst im Rahmen 4 montiert wird. Bei dieser Anordnung kann die gemeinsame Spannplatte 28 auch unmittelbar als Träger einer Kabelpritsche 32 dienen.

In die Preßplatte 10.2, die der Einzelspannplatte 29 mit dem überstehenden Plattenrand 31 zugeordnet ist, sind die Spannschrauben 29' aufnehmende starre Hülsen 33 eingelassen, die etwas kürzer sind als die Laibungsfläche 6 breit ist. Die Hülsen 33 sind starr mit der Einzelspannplatte 29 verbunden und tragen ein Muttergewinde für die Spannschrauben 29'. Die von der Keilfläche 26 abgewandten Flächen 34 beider Preßplatten 10.1, 10.2 verlaufen im verspannten Zustand in zueinander parallelen Ebenen.

Das Verpressen der Paßstücke 7 ist in zwei Schritten möglich, wobei immer die gemeinsame Spannplatte 28 dem Rahmen 4 anliegt. Zunächst werden, ausgehend von Fig. 9, die Spannschrauben 29′ angezogen, die mit der über die Rahmenseitenfläche 5′ vorstehenden Einzelspannplatte 29 verbunden sind. Dadurch wird die Einzelspannplatte 29 und die ihr zugeordnete, im Ausführungsbeispiel also untere Preßplatte 10.2 in Durchführungsrichtung in den Rahmen 4 gezogen, wobei sie sich entlang der Keilfläche 26 an der dabei an der gemeinsamen Spannplatte 28 abgestützten oberen Preßplatte 10.1 verschiebt, wodurch sich die für die Verpressung der Paßstücke 7 wirksame Gesamtdicke beider Preßplatten 10.1, 10.2 vergrößert. Wenn dann beide Preßplatten 10.1, 10.2 sich im wesentlichen deckend übereinander liegen, ist auch die die Rahmenseitenfläche 5′ übergreifende Einzelspannplatte 29 am Rahmen 4 zum Anschlag gekommen, so daß zwischen ihr und der gemeinsamen Spannplatte 28 die untere Preßplatte 10.2 am Rahmen 4 gegen weitere Verschiebungen in Durchführungsrichtung gesichert ist. Dabei kann diese Preßplatte 10.2 zwischen den Spannplatten 28, 29 in Richtung der Spannschrauben 29′ auch noch gestaucht und dadurch quer dazu vergrößert sein. Über die gemeinsame Spannplatte 28 ist dann auch die zweite, also obere Preßplatte 10.1 am Rahmen 4 gegen Verschiebungen in Durchführungsrichtung gesichert. Jedoch kann diese zweite Preßplatte 10.1 noch zu einer weiteren Verpressung der Paßstücke 7 nachgespannt werden. Dazu werden als zweiter Schritt nur die ihr zugeordneten Spannschrauben 30′ angezogen, so daß auch diese Preßplatte 10. 1 quer zur Rahmenebene komprimiert wird, wobei die ihr zugeordnete Einzelspannplatte 30 in den Rahmen 4 hinein gezogen werden kann, weil sie nirgends über die Preßplatte 10.1 vorsteht und daher nicht am Rahmen 4 oder an der anderen Einzelspannplatte 29 anschlagen kann.

Um die Druckvorrichtung zu lösen, besitzt die gemeinsame Spannplatte 28 in den über die Stirnflächen 25 der Preßplatten 10.1, 10.2 vorstehenden Randbereichen Löcher 35 mit Muttergewinde zum Eindrehen sich gegen die Rahmenseitenflächen 5 oder die Wand 3 abstützender, in der Zeichnung nicht dargestellter Abziehschrauben. Vor dem Abziehen solcher Abziehschrauben müssen aber die Spannschrauben 29′ gelockert oder gelöst werden, welche die gemeinsame Spannplatte 28 mit der über den Rahmen 4 vorstehenden Einzelspannplatte 29 verbunden. Dann kann durch Verdrehen der Abziehschrauben die gemeinsame Spannplatte 28 vom Rahmen 4 abgedrückt werden, wobei sie die obere Preßplatte 10.1 mitnimmt und von der unteren Preßplatte 10.2 abzieht. Die Nachspannung der oberen Preßplatte 10.1 wird zweckmäßigerweise vor diesem Abziehen aufgehoben, jedoch können die sie bewirkenden Spannschrauben 30′ auch erst nach dem Abziehen gelockert werden.

**Ansprüche**

1. Durchführung für Leitungen (1), wie Kabel, Rohre oder dergl., durch eine Wandöffnung (2), bestehend aus einem die Wandöffnung rundum begrenzenden wandfesten Rahmen (4), an dessen sich paarweise gegenüber liegenden Rahmenseiten zwei in Leitungslängsrichtung hintereinander liegende Rahmenseitenflächen (5, 5′) und dazwischen eine in den Rahmenseitenflächen nach innen in die Wandöffnung vorspringende Laibungsfläche (6) ausgebildet sind, ferner aus den Leerraum des Rahmens (4) ausfüllenden, ganz oder teilweise elastischen Paßstücken (7), die gegeneinander und einerseits gegen die Leitungen (1), andererseits gegen die Laibungsfläche (6) des Rahmens abdichten, wozu die Paßstücke (7) den Leitungsquerschnitten entsprechende Leitungsaufnahmen bilden, die von Trennflächen (8) zwischen den Paßstücken (7) geschnitten werden, und aus einer die Paßstücke (7) im Rahmen (4) elastisch verpressenden Druckvorrichtung (9) mit ebenfalls ganz oder teilweise elastischen, innerhalb des Rahmens (4) liegenden Preßplatten (10.1, 10.2), dadurch gekennzeichnet, daß die Paßstücke (7) einstückig quer über die Wandöffnung (2) von einer zur gegenüber liegenden anderen Rahmenseite reichen und an beiden Enden mit ihren Stirnflächen (11) der Laibungsfläche (6) anliegen sowie nach außen über die Rahmenseitenflächen (5, 5′) greifende, dadurch die Paßstücke (7) in Leitungslängsrichtung am Rahmen (4) fixierende Verankerungsnasen (12) aufweisen, und daß die Paßstücke (7) an den Trennflächen (8) mit einander zugeordneten Vorsprüngen und Vertiefungen (13) versehen sind, durch die benachbarte Paßstücke (7) an der Trennfläche (8) in Leitungslängsrichtung formschlüssig miteinander im Eingriff stehen.

2. Durchführung nach Anspruch 1, dadurch gekennzeichnet, daß die Vorsprünge und Vertiefungen (13) als quer zur Leitungslängsrichtung verlaufende Nuten und Federn ausgebildet sind.

3. Durchführung nach Anspruch 1 oder 2, dadurch gekennzeichnet, daß die Paßstücke (7) an mindestens der einen ihrer quer zur Leitungslängsrichtung verlaufenden Querflächen (14.1, 14.2) konvex gewölbt sind, wobei die konvex gewölbte Querfläche (14.1) auf der Durchführungsseite mit höherem Druck liegt.

4. Durchführung nach einem der Ansprüche 1 bis 3, dadurch gekennzeichnet, daß die Paßstücke (7) an einer ihrer Querflächen (14.1) Einschnitte (100) aufweisen, die senkrecht zur Querfläche (14.1) verlaufen.

5. Durchführung nach einem der Ansprüche 1 bis 4, dadurch gekennzeichnet, daß bei dicken Wänden an beiden Enden der Wandöffnung (2) je ein Rahmen (4) mit Paßstücken (7) und Druckvorrichtung (9) angeordnet und zwischen beiden Rahmen (4) ein Futterrohr (22) in die Wand (3) eingebettet ist, dessen Mantel (22') die äußere Begrenzung der innen liegenden Rahmenseitenflächen (5') bildet.

6. Durchführung nach Anspruch 5, dadurch gekennzeichnet, daß der Mantel (22') an beiden Enden eine einwärts in die Wandöffnung (2) vorstehende Ringrippe (23) aufweist, welche unmittelbar die innen liegende Rahmenseitenfläche (5') bildet.

7. Durchführung nach Anspruch 6, dadurch gekennzeichnet, daß an der Ringrippe (23) eine Kappe (24) mit einer Mantelwand (24') einrastbar ist, die eine Schalfläche für die Laibungsfläche (6) des Rahmens (4) bildet und bei einer Betonwand die Ausformung des Rahmens (4) beim Gießen der Wand unmittelbar an der Berandung der Wandöffnung (2) ermöglicht.

8. Durchführung nach einem der Ansprüche 1 bis 7, dadurch gekennzeichnet, daß wie die Paßstücke (7) auch mindestens zwei der Preßplatten (10.1, 10.2) einstückig quer über die Wandöffnung (2) von einer zur gegenüber liegenden anderen Rahmenseite reichen und an beiden Enden mit ihren Stirnflächen (25) der Laibungsfläche (6) anliegen, daß die beiden Preßplatten (10.1, 10.2) im wesentlichen keilförmigen Querschnitt mit geneigt zur Leitungslängsrichtung verlaufenden Keilflächen (26) aufweisen und an diesen Keilflächen (26) so aneinander liegen, daß sich das dicke Keilende der einen Preßplatte am dünnen Keilende der jeweils anderen Preßplatte befindet, daß die beiden Preßplatten (10.1, 10.2) ferner auf der einen Seite der Durchführung durch eine ihren quer zur Leitungslängsrichtung verlaufenden Querflächen (27) anliegende gemeinsame Spannplatte (28) verbunden sind, daß auf der anderen Seite der Durchführung zwei getrennte Spannplatten (29, 30) vorgesehen sind, die dort jeweils der Querfläche (27') nur einer der Preßplatten (10.1, 10.2) anliegen, und daß die gemeinsame Spannplatte (28) einerseits und die beiden getrennten Spannplatten (29, 30) andererseits durch Spannschrauben (29', 30') verbunden sind, die jeweils nur in derjenigen Preßplatte (10.1, 10.2) verlaufen, welcher die in die Spannschrauben (29', 30') angeschlossene Einzelspannplatte (29, 30) zugeordnet ist.

9. Durchführung nach Anspruch 8, dadurch gekennzeichnet, daß eine der Einzelspannplatten (29) und die gemeinsame Spannplatte (28) am Rande seitlich über die Preßplatte (10.2) vorstehen und die Rahmenseitenflächen (5, 5') übergreifen, daß die andere Einzelspannplatte (30) aber nicht über die Stirn- und Keilflächen (25, 26) ihrer Preßplatte (10.1) vorsteht, mit diesen Flächen also höchstens bündig ist, und daß sich die überstehende Einzelspannplatte (29) am dickeren Keilende, die bündige Einzelspannplatte am dünneren Keilende ihrer jeweiligen Preßplatte befindet.

10. Durchführung nach Anspruch 9, dadurch gekennzeichnet, daß der überstehende Plattenrand (31) an der Einzelspannplatte (29) sich nur auf der der anderen Einzelspannplatte (30) gegenüber liegenden Seite und nicht über die Stirnflächen (25) der eigenen Preßplatte (10.2) hinaus erstreckt.

11. Durchführung nach Anspruch 9 oder 10, dadurch gekennzeichnet, daß in die der Einzelspannplatte (29) mit dem überstehenden Plattenrand (31) zugeordnete Preßplatte (10.1) die Spannschrauben (29') aufnehmende starre Hülsen (33) eingelassen sind, die etwas kürzer sind als die Laibungsfläche (6) breit ist.

12. Durchführung nach Anspruch 11, dadurch gekennzeichnet, daß die Hülsen (33) starr mit der Einzelspannplatte (29) verbunden sind und ein Muttergewinde für die Spannschrauben (29') aufweisen.

13. Durchführung nach einem der Ansprüche 8 bis 12, dadurch gekennzeichnet, daß die von der Keilfläche (26) abgewandten Flächen (34) beider Preßplatten (10.1, 10.2) in zueinander parallelen Ebenen verlaufen.

14. Durchführung nach einem der Ansprüche 9 bis 13, dadurch gekennzeichnet, daß die gemeinsame Spannplatte (28) in den über die Stirnflächen (25) der Preßplatten (10.1, 10.2) vorstehenden Randbereichen Löcher (35) mit Muttergewinde zum Eindrehen sich gegen die Rahmenseitenflächen (5) oder die Wand (3) abstützender Abziehschrauben aufweist.

15. Verfahren zur Montage einer Durchführung nach den Ansprüchen 1 bis 14, dadurch gekennzeichnet, daß die Paßstücke (7) elastisch quer zur Rahmenebene durchgewölbt und dabei an der durch die Wölbung konkaven Paßstückfläche (14.2) die Verankerungsnasen (12) einander auf einen Außenabstand (15) gleich oder kleiner als das lichte Rahmenmaß genähert werden, und daß die so verformten Paßstücke (7) mit der konkaven Paßstückfläche (14.2) und den einander genäherten Verankerungsnasen (12) voran unverkippt in den Rahmen (4) eingeschoben werden.

16. Werkzeug zur Durchführung des Verfahrens nach Anspruch 15, gekennzeichnet durch einen Bügel (16) mit am Paßstücke (7) abstützbaren Bügelschenkeln (18) und einer im Bügelrücken (19) etwa mittig zwischen den Bügelschenkeln angeordneten Zugschraube (20), an der ein das Paßstück (7) umgreifender Haken (21) angeordnet ist, der durch Spannen der Zugschraube (20) in Richtung zum Bügelrücken (19) hin bewegbar ist.

Fig.1

EP 0 303 044 A2

Fig.2

Fig.3

Fig.4

Fig.5

## Fig.6

## Fig.7

Fig.8

EP 0 303 044 A2

EP 0 303 044 A2

**Fig.9**

**Fig.10**

**Fig.11**

**Fig.12**